(19) Europäisches Patentamt
European Patent Office
Office européen des brevets

(11) **EP 3 742 344 B1**

(12) **EUROPEAN PATENT SPECIFICATION**

(45) Date of publication and mention
of the grant of the patent:
**04.03.2026 Bulletin 2026/10**

(51) International Patent Classification (IPC):
**G06N 3/088** (2023.01)    **G06N 3/084** (2023.01)
**G06N 3/045** (2023.01)    **G06N 3/047** (2023.01)
**G06N 3/0499** (2023.01)    **G06N 3/092** (2023.01)

(21) Application number: **19175574.3**

(22) Date of filing: **21.05.2019**

(52) Cooperative Patent Classification (CPC):
**G06N 3/084; G06N 3/045; G06N 3/047;
G06N 3/0499; G06N 3/088; G06N 3/092**

(54) **COMPUTER-IMPLEMENTED METHOD OF AND APPARATUS FOR TRAINING A NEURAL NETWORK**

COMPUTERIMPLEMENTIERTES VERFAHREN UND VORRICHTUNG ZUM TRAINIEREN EINES NEURONALEN NETZWERKS

PROCÉDÉ MIS EN OEUVRE PAR ORDINATEUR ET APPAREIL DE FORMATION D'UN RÉSEAU NEURONAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.11.2020 Bulletin 2020/48**

(73) Proprietor: **Robert Bosch GmbH
70442 Stuttgart (DE)**

(72) Inventors:
• **Xiao, Huang
71839 Gerlingen (DE)**
• **Herman, Michael
71065 Sindelfingen (DE)**

(56) References cited:
**US-A1- 2019 126 472**

• JONATHAN LACOTTE ET AL: "Risk-Sensitive Generative Adversarial Imitation Learning", 24 December 2018 (2018-12-24), XP055643671, Retrieved from the Internet <URL:https://arxiv.org/pdf/1808.04468.pdf> [retrieved on 20191118]

• YUNZHU LI ET AL: "InfoGAIL: Interpretable Imitation Learning from Visual Demonstrations", 14 November 2017 (2017-11-14), XP055644289, Retrieved from the Internet <URL:https://arxiv.org/pdf/1703.08840.pdf> [retrieved on 20191120]

• DANIEL S BROWN ET AL: "Extrapolating Beyond Suboptimal Demonstrations via Inverse Reinforcement Learning from Observations", ARXIV.ORG, CORNELL UNIVERSITY LIBRARY, 201 OLIN LIBRARY CORNELL UNIVERSITY ITHACA, NY 14853, 12 April 2019 (2019-04-12), XP081168741

• DIEDERIK GREVELING: "Modelling human driving behaviour using Generative Adversarial Networks", 25 January 2018 (2018-01-25), XP055524483, Retrieved from the Internet <URL:http://fse.studenttheses.ub.rug.nl/16431/1/Thesis_Final_DP_Greveling_s2065894.pdf> [retrieved on 20181116]

EP 3 742 344 B1

## Description

Field of the Invention

Exemplary embodiments relate to a computer-implemented method of training a first neural network depending on demonstration data.

Further exemplary embodiments relate to an apparatus for training a first neural network depending on demonstration data.

Further exemplary embodiments relate to a method of controlling at least one actuator of a mobile device, particularly a vehicle, and/or movable device.

Lacotte, Jonathan, et al. "Risk-sensitive generative adversarial imitation learning." The 22nd International Conference on Artificial Intelligence and Statistics, PMLR 2019, derive two different versions of risk- sensitive GAIL (RS-GAIL) optimization problem that aim at matching the risk profiles of the agent and the expert w.r.t. Jensen-Shannon (JS) divergence and Wasserstein distance, and develop risk-sensitive generative adversarial imitation learning algorithms.

Summary

The invention is set out in independent claims 1, 9, 10 and 11. Preferred aspects of the invention are set out in the dependent claims.

Exemplary preferred embodiments relate to a computer-implemented method of training a first neural network depending on demonstration data, particularly expert demonstrations, comprising a plurality of trajectories being characterized by state-action-pairs, wherein said first neural network is configured to map states to actions, said method comprising: sampling a first number of trajectories from said first neural network, sampling a second number of trajectories from said demonstration data, determining a reward function associated with an optimal transport mapping a distribution of said first number of trajectories to a distribution of said second number of trajectories which minimizes a transport cost associated with said optimal transport depending on a predetermined transport cost function, training said first neural network depending on said optimal cost function. This enables to efficiently train the first neural network, wherein a so trained first neural network can generate trajectories similar to those comprised in the demonstration data. In other words, preferred embodiments enable to obtain a trained first neural network that can "imitate" expert behavior as characterized by the demonstration data. Advantageously, according to preferred embodiments, expert interaction is not required for successful training of said first neural network. According to Applicant's analysis, using said optimal transport enables to train the first neural network particularly efficiently. Moreover, by using the principle according to the embodiments, even long-term trajectories based on said demonstration data may be obtained, e.g. for (artificial) agents that may are used for imitating an expert's behavior.

Said demonstration data represent a finite set $X_E = \{\tau_i\}_1^N$ of expert demonstrations with N many trajectories $\tau_i$, wherein each trajectory $\tau_i$ consists of ordered state-action pairs (s, a) of varying length $L_i$: $\tau_i = \{(s, a)\}_{L_i}$. As an example, in the field of autonomous driving, the demonstration data represent a collection of highway driving trajectories of multiple vehicles. Such collection may e.g. obtained by observing human drivers of said vehicles in said real-world environment of the highway.

According to further preferred embodiments, said sampling of the first number of trajectories from said first neural network may comprise providing a third number of (e.g., random) states to the first neural network as input data, obtaining a corresponding third number of output data, i.e. actions, associated with said input data, wherein said third number of states together with said third number of output data forms said first number of trajectories.

According to further preferred embodiments, the first number of trajectories from said first neural network may be characterized by the set $X_G^{l1}$, wherein $l1$ is said first number. According to further preferred embodiments, the second number of trajectories from said demonstration data may be characterized by the set $X_E^{l2}$, wherein $l2$ is said second number. Note that according to further preferred embodiments, said second number $l2$ is different from said first number $l1$. In other words, according to further preferred embodiments, for said step of determining the reward function, different numbers $l1 \neq l2$ of trajectories may be sampled from the first neural network and the demonstration data. According to further preferred embodiments, however, $l1 = l2$ is also possible.

According to further preferred embodiments, said method further comprises modeling said reward function by means of a second neural network. According to further preferred embodiments, said second neural network may be configured to receive state information and action information as input values, e.g. in form of a single vector having a plurality of components, some of which represent said state information, and the others of which represent action information, and to output a reward, e.g. in form of a scalar value.

According to further preferred embodiments, the second neural network is trained by taking stochastic gradient ascent step to maximize the expected reward deviation among both sampled data (e.g., from the first neural network and from the demonstration data).

According to further preferred embodiments, the second neural network may be trained in accordance with the following equation:

$$E_{\substack{(s,a)_i \sim X_G \\ (s,a)_j \sim X_E}}\left[u(s,a)_j - u(s,a)_i\right],$$

however, preferably, subject to the Lipschitz constraint:

$$u_{(s,a)_j \sim X_E}(s,a) - u_{(s,a)_i \sim X_G}(s,a) \leq c\left[(s,a)_i, (s,a)_j\right], \ \forall i \sim 1:l1, j \sim 1:l2.$$

According to further preferred embodiments, the training of said second neural network may also be performed in said training step.

According to further preferred embodiments, said first neural network and/or said second neural network may comprise an input layer for receiving input data, an output layer for providing output data, and one or more hidden layers arranged between said input layer and said output layer. According to further preferred embodiments, said first neural network and/or said second neural network may be deep neural networks (DNN).

According to further preferred embodiments, said first neural network may also be denoted as "policy network", and/or said second neural network may also be denoted as "reward network".

According to further preferred embodiments, the architecture and/or topology of the first neural network and/or the second neural network may be chosen depending on a specific field of application related to the demonstration data, e.g. expert data, and/or a use of said demonstration data.

According to further preferred embodiments, the method further comprises initializing said first neural network and/or said second neural network with random or pseudorandom parameters.

According to further preferred embodiments, the method further comprises repeating the steps of sampling a first number of trajectories, sampling a second number of trajectories, determining a reward function, training said first neural network depending on said optimal cost function, preferably until a predetermined convergence criterion is reached. This way, a trained first neural network is obtained.

The reward function is determined in accordance with the following equation:

$$u^* \triangleq \sup_u \left( E_{\substack{(s,a)_i \sim X_G \\ (s,a)_j \sim X_E}}\left[u(s,a)_j - u(s,a)_i\right] - \frac{1}{4\varepsilon}\sum_{i,j}\left\{u_{(s,a)_j \sim X_E}(s,a) - u_{(s,a)_i \sim X_G}(s,a) - \right.\right.$$
$$\left.\left. c\left[(s,a)_i,(s,a)_j\right]\right\}_+^2 \right) ,$$ wherein $u(s, a)$ characterizes the (e.g., current) reward function evaluated for a specific state-action pair $(s, a)$, wherein $E_{(s,a)}$ characterizes an empirical expectation, wherein $\frac{1}{4\varepsilon}\sum_{i,j}\left\{u_{(s,a)_j \sim X_E}(s,a) - u_{(s,a)_i \sim X_G}(s,a) - c\left[(s,a)_i,(s,a)_j\right]\right\}_+^2$ characterizes a regularizer term, wherein $\varepsilon$ characterizes a hyperparameter for said regularizer term (may e.g. be chosen depending on a field of application and/or to control the training process), wherein i is an index variable associated with the first number $l1$ of trajectories, wherein j is an index variable associated with the second number $l2$ of trajectories, wherein $c[\cdot]$ represents said predetermined transport cost function.

According to further preferred embodiments, said training may be performed by applying conventional training techniques known by the skilled man in the field of reinforcement learning. However, according to further preferred embodiments, other training techniques for neural networks may also be applied for said step of training.

According to further preferred embodiments, said training is performed by applying at least one of the following policy optimization techniques: Trust Region Policy Optimization, TRPO, Proximal Policy Optimization, PPO. As an example, TRPO as disclosed by J. Schulman, S. Levine, P. Moritz, M. I. Jordan and P. Abbeel, "Trust Region Policy Optimization", arXiv: 1502.05477v5 [cs.LG], 20 Apr 2017, [reference 1] and/or TPO as disclosed by J. Schulman, F. Wolski, P. Dhariwal, A. Radford, O. Klimov, "Proximal Policy Optimization Algorithms ", arXiv:1707.06347v2 [cs.LG], 28 Aug 2017, [reference 2], may be used for training said first neural network according to further preferred embodiments.

According to further preferred embodiments, said training comprises maximizing a time-discounted expected long-term reward. This way, particularly also long-term trajectories similar to those of the expert data may be generated using the principle according to the embodiments.

According to further preferred embodiments, said training is performed in accordance with the following equation: $L_{u^*}(\theta) = \mathbb{E}_{s_0, a_0, \dots} \left[ \sum_{t=0}^{\infty} \gamma^t u^*(s_t, a_t) \right]$, wherein $(s_t, a_t)$ is a state-action pair at time t as can be obtained by the first neural network, wherein $\gamma$ is a discount factor, wherein $\mathbb{E}_{s_0, a_0, \dots}$ characterizes expected time-discounted long-term cumulative rewards computed by $u$ function at each time step, wherein $\theta$ characterizes parameters of the first neural network, and wherein $L_{u^*}(\theta)$ represents said time-discounted expected long-term reward.

Said method further comprises using the trained first neural network for determining one or more actions depending on one or more states input to said first neural network, wherein said using preferably comprises determining trajectories for at least one mobile and/or movable device, e.g. for controlling a movement of said mobile and/or movable device or at least a component of said mobile and/or movable device depending on said trajectories.

According to further preferred embodiments, said method further comprises determining control output for controlling at least one actuator of said mobile and/or movable device, preferably depending on state input characterizing state information associated with said mobile and/or movable device, wherein said control output is determined by means of said first neural network depending on said state input. This enables to efficiently control said vehicle and/or movable device or e.g. corresponding components of cyberphysical systems (CPS).

Further preferred embodiments relate to an apparatus for performing the method according to the embodiments, wherein said apparatus preferably comprises at least one calculating unit and at least one memory unit associated with said at least one calculating unit for at least temporarily storing a computer program and/or data, wherein said computer program is configured to at least temporarily control an operation of said apparatus, particularly an execution of a method according to the embodiments.

Further preferred embodiments relate to a use of the method according to the embodiments and/or of the apparatus according to the embodiments and/or of a trained first neural network as obtained by the method according to the embodiments and/or of the computer program according to the embodiments for determining control output for controlling at least one actuator of a mobile and/or movable device, preferably depending on state input characterizing state information associated with said mobile and/or movable device.

Further preferred embodiments relate to a use of optimal transport for performing imitation learning of a machine learning system comprising at least a first neural network depending on demonstration data. According to Applicant's analysis, applying the principle of optimal transport to the field of machine learning enables to efficiently train a machine learning system e.g. comprising a/said first neural network depending on demonstration data such as expert demonstrations such that a so obtained trained first neural network can imitate expert behavior associated with said expert demonstrations.

Further preferred embodiments relate to a method of controlling at least one actuator of a mobile device, particularly a vehicle, and/or movable device, particularly a component of a robot (e.g., actuator for driving a robotic arm), comprising training a first neural network in accordance with the method according to the embodiments, whereby a trained first neural network is obtained, and controlling said at least one actuator depending on an output of said trained first neural network. As a further example, one or more actuators of an (autonomous) vehicle may be controlled using the (trained) first neural network as provided in accordance with the method according to the embodiments.

Further preferred embodiments relate to a computer program comprising instructions which, when the program is executed by a computer, cause the computer to carry out the method according to according to the embodiments.

Further preferred embodiments relate to a computer-readable storage medium comprising instructions which, when executed by a computer, cause the computer to carry out the method according to the embodiments.

Further preferred embodiments relate to a data carrier signal carrying the computer program according to the embodiments.

Brief description of the figures

Some exemplary embodiments will now be described with reference to the accompanying drawings, in which:

Fig. 1    schematically depicts a simplified flow-chart of a method according to preferred embodiments,

Fig. 2    schematically depicts a simplified block diagram according to further preferred embodiments,

Fig. 3    schematically depicts a simplified block diagram of a first neural network according to further preferred embodiments,

Fig. 4    schematically depicts a simplified block diagram of a second neural network according to further preferred embodiments,

Fig. 5    schematically depicts a simplified block diagram of an apparatus according to further preferred embodiments.

Fig. 6    schematically depicts a simplified block diagram according to further preferred embodiments, and

Fig. 7    schematically depicts a simplified flow-chart of a method according to further preferred embodiments.

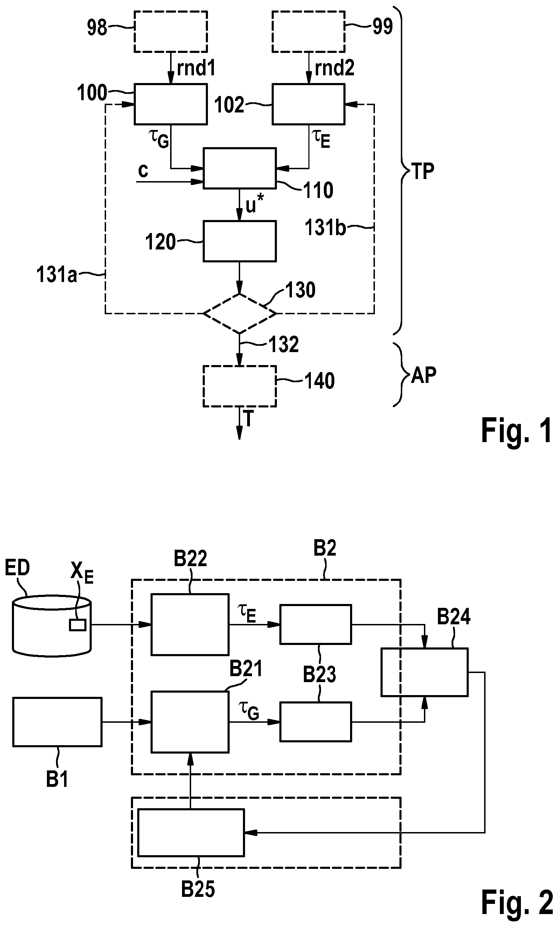

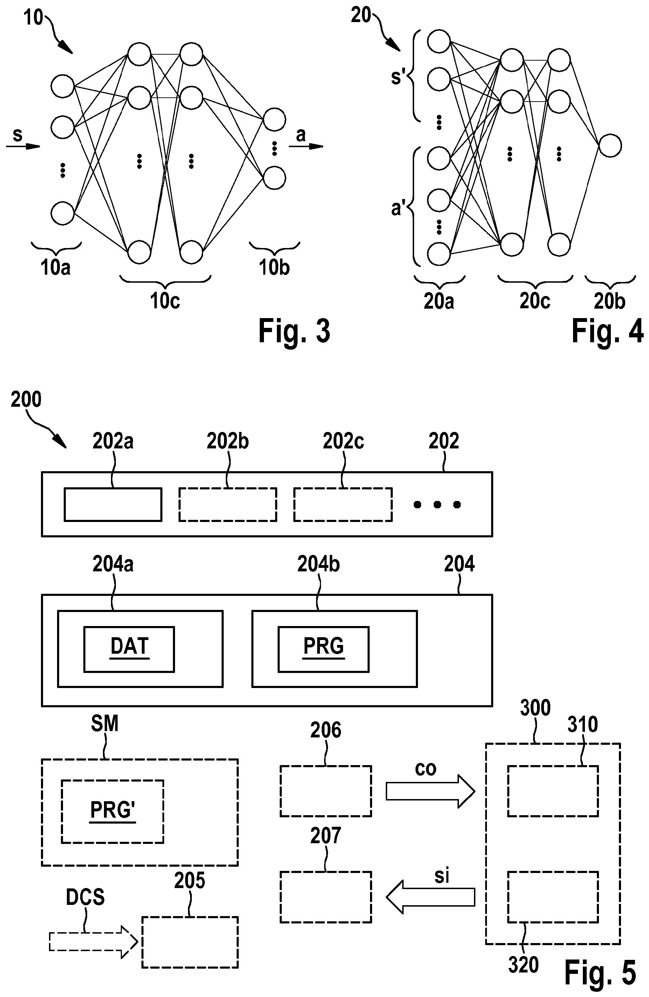

Figure 1 schematically depicts a simplified flow-chart of a method according to preferred embodiments. Proposed is a computer-implemented method of training a first neural network 10 (Fig. 3) depending on demonstration data ED (Fig. 2), particularly expert demonstrations ED, comprising a plurality of trajectories being characterized by state-action-pairs, wherein said first neural network 10 is configured to map states s (Fig. 3) to actions a. The method comprises, cf. the flow-chart of Fig. 1, sampling 100 a first number of trajectories $\tau_G$ from said first neural network 10, sampling 102 a second number of trajectories $\tau_E$ from said demonstration data ED, determining 110 a reward function u* associated with an optimal transport mapping a distribution of said first number of trajectories $\tau_G$ to a distribution of said second number of trajectories $\tau_E$ which minimizes a transport cost associated with said optimal transport depending on a predetermined transport cost function c, training 120 said first neural network 10 (Fig. 3) depending on said optimal cost function u*. This enables to efficiently train the first neural network 10, wherein a so trained first neural network can generate trajectories similar to those comprised in the demonstration data. In other words, preferred embodiments enable to obtain a trained first neural network that can "imitate" expert behavior as characterized by the demonstration data ED.

Advantageously, according to preferred embodiments, expert interaction is not required for successful training 120 of said first neural network 10. According to Applicant's analysis, using said optimal transport enables to train the first neural network 10 particularly efficiently. Moreover, by using the principle according to the embodiments, even long-term trajectories based on said demonstration data ED may be obtained, e.g. for (artificial) agents that may are used for imitating an expert's behavior.

According to further preferred embodiments, said demonstration data ED (Fig. 3) may represent a finite set $X_E = \{\tau_i\}_1^N$ of expert demonstrations with N many trajectories $\tau_i$, wherein each trajectory $\tau_i$ consists of ordered state-action pairs (s, a) of varying length $L_i$: $\tau_i = \{(s, a)\}_{L_i}$. As an example, in the field of autonomous driving, the demonstration data ED may e.g. represent a collection of highway driving trajectories of multiple vehicles. Such collection may e.g. obtained by observing human drivers of said vehicles in said real-world environment of the highway.

According to further preferred embodiments, said sampling 100 of the first number of trajectories from said first neural network 10 may comprise providing a third number of (e.g., random) states s to the first neural network 10 (Fig. 3) as input data, obtaining a corresponding third number of output data, i.e. actions a, associated with said input data s, wherein said third number of states together with said third number of output data forms said first number of trajectories. According to further preferred embodiments, the first number of trajectories from said first neural network may be characterized by the set $X_G^{l1}$, wherein $l1$ is said first number. According to further preferred embodiments, the second number of trajectories from said demonstration data may be characterized by the set $X_E^{l2}$, wherein $l2$ is said second number. Note that according to further preferred embodiments, said second number $l2$ is different from said first number $l1$. In other words, according to further preferred embodiments, for said step of determining 110 the reward function u* (Fig. 1), different numbers $l1 \neq l2$ of trajectories may be sampled from the first neural network 10 and the demonstration data ED.

According to further preferred embodiments, said method further comprises modeling said reward function u* by means of a second neural network 20, cf. Fig. 4. According to further preferred embodiments, said second neural network 20 may be configured to receive state information s' and action information a' as input values, e.g. in form of a single vector having a plurality of components, some of which represent said state information s', and the others of which represent said action information a', and to output a reward, e.g. in form of a scalar value.

According to further preferred embodiments, the second neural network 20 is trained by taking stochastic gradient ascent step to maximize the expected reward deviation among both sampled data (e.g., from the first neural network 10 and from the demonstration data ED).

According to further preferred embodiments, the second neural network 20 may be trained in accordance with the following equation:

$$E_{\substack{(s,a)_i \sim X_G \\ (s,a)_j \sim X_E}} \left[ u(s, a)_j - u(s, a)_i \right],$$

wherein u(s, a) characterizes the reward function, and wherein c[·] represents a predetermined transport cost function, however, preferably, subject to the Lipschitz constraint:

$$u_{(s,a)_j \sim X_E}(s,a) - u_{(s,a)_i \sim X_G}(s,a) \leq c\big[(s,a)_i,(s,a)_j\big], \ \forall i \sim 1{:}l1, j \sim 1{:}l2.$$

According to further preferred embodiments, the training of said second neural network 20 may also be performed in said training step 110.

According to further preferred embodiments, said first neural network 10 (Fig. 3) may comprise an input layer 10a for receiving input data s, an output layer 10b for providing output data a, and one or more hidden layers 10c arranged between said input layer 10a and said output layer 10b. According to further preferred embodiments, said first neural network may be a deep neural network (DNN). According to further preferred embodiments, the second neural network 20 (Fig. 4) may comprise a similar structure 20a, 20b, 20c and may optionally also be a DNN. According to further preferred embodiments, said first neural network 10 may also be denoted as "policy network" or "policy generator", and/or said second neural network 20 may also be denoted as "reward network".

According to further preferred embodiments, the architecture and/or topology of the first neural network 10 and/or the second neural network 20 may be chosen depending on a specific field of application related to the demonstration data, e.g. expert data, and/or a use of said demonstration data.

According to further preferred embodiments, cf. Fig. 1, the method further comprises initializing 98 said first neural network 10 with random or pseudorandom parameters rnd1 and/or initializing 99 said second neural network 20 with random or pseudorandom parameters.

According to further preferred embodiments, the method further comprises repeating the steps of sampling 100 a first number of trajectories, sampling 102 a second number of trajectories, determining 110 a reward function, training 120 said first neural network 10 depending on said optimal cost function u*, preferably until a predetermined convergence criterion is reached. This way, a trained first neural network is obtained. As an example, in the optional step 130, it can be determined whether said convergence criterion is reached. If so, the first neural network 10 may be considered to be sufficiently trained, and a further optional step 140 may follow, in which the trained first neural network 10 is used, e.g. for providing actions a and/or trajectories T depending on state input. If the determination 130 yields that said convergence criterion is not (yet) reached, the training process may be repeated, cf. the dashed arrows 131a, 131b, and so on. Aspects of a training phase of said first neural network 10 of the depicted process are indicated by a first bracket TP, wherein (optional) aspects of application of the trained first neural network 10 are indicated by the second bracket AP.

According to further preferred embodiments, said reward function u* may be determined in accordance with the following equation:

$$u^* \triangleq \sup_{u} \left( E_{\substack{(s,a)_i \sim X_G \\ (s,a)_j \sim X_E}} \big[u(s,a)_j - u(s,a)_i\big] - \frac{1}{4\varepsilon}\sum_{i,j}\Big\{ u_{(s,a)_j \sim X_E}(s,a) - u_{(s,a)_i \sim X_G}(s,a) - \right.$$

$$\left. c\big[(s,a)_i,(s,a)_j\big]\Big\}_+^2 \right)$$, wherein $u(s,a)$ characterizes the (e.g., current) reward function evaluated for a specific state-action pair $(s, a)$, wherein $E_{(s,a)}$ characterizes an empirical expectation, wherein

$$\frac{1}{4\varepsilon}\sum_{i,j}\Big\{ u_{(s,a)_j \sim X_E}(s,a) - u_{(s,a)_i \sim X_G}(s,a) - c\big[(s,a)_i,(s,a)_j\big]\Big\}_+^2$$ characterizes a regularizer term, wherein $\varepsilon$ characterizes a hyperparameter for said regularizer term (may e.g. be chosen depending on a field of application and/or to control the training process), wherein $i$ is an index variable associated with the first number $l1$ of trajectories, wherein $j$ is an index variable associated with the second number $l2$ of trajectories (i.e., the index (i, j) is coming from respective samples of said trajectories), wherein $c[\cdot]$ represents said predetermined transport cost function, and wherein "$_+$" represents a rectified linear unit, ReLU, function. As an example, the ReLU function may be $f(x) = \max(0, x)$, wherein $\max()$ is the maximum function.

According to further preferred embodiments, the predetermined transport cost function $c[\cdot]$ may be determined based on a field of application of said first neural network 10. As an example, the predetermined transport cost function may be identical to or based on the Euclidean distance. As a further example, another type of function may also be used for the predetermined transport cost function. According to further embodiments, the specific type of transport cost function may also be determined based on expert knowledge and/or experimentation and/or simulations.

According to further preferred embodiments, said training 110 may be performed by applying conventional training techniques known by the skilled man in the field of reinforcement learning.

According to further preferred embodiments, said training 110 (Fig. 1) is performed by applying at least one of the following policy optimization techniques: Trust Region Policy Optimization, TRPO, Proximal Policy Optimization, PPO. As an example, TRPO as disclosed by J. Schulman, S. Levine, P. Moritz, M. I. Jordan and P. Abbeel, "Trust Region Policy Optimization", arXiv: 1502.05477v5 [cs.LG], 20 Apr 2017, [reference 1] and/or TPO as disclosed by J. Schulman, F. Wolski, P. Dhariwal, A. Radford, O. Klimov, "Proximal Policy Optimization Algorithms ", arXiv:1707.06347v2 [cs.LG], 28 Aug 2017, [reference 2], may be used for training said first neural network according to further preferred embodiments.

According to further preferred embodiments, said training 110 comprises maximizing a time-discounted expected long-term reward. This way, particularly also long-term trajectories similar to those of the expert data may be generated using the principle according to the embodiments.

According to further preferred embodiments, said training 110 is performed in accordance with the following equation: $L_{u^*}(\theta) = \mathbb{E}_{s_0, a_0, \ldots} \left[ \sum_{t=0}^{\infty} \gamma^t u^*(s_t, a_t) \right]$, wherein $(s_t, a_t)$ is a state-action pair at time t as can be obtained by the first neural network, wherein $(s_0, a_0)$ is an initial state-action pair, wherein $\gamma$ is a discount factor, wherein $\theta$ characterizes parameters of the first neural network 10, and wherein $L_{u^*}(\theta)$ represents a or said time-discounted expected long-term reward.

According to further preferred embodiments, for said training 110, the first neural network's parameters $\theta$ can e.g. be updated using the gradients of the loss function $L$, i.e., $\theta^{k+1} \leftarrow \theta^k - \lambda \Delta_\theta L_{u^*}$.

According to further preferred embodiments, after updating the first neural network (e.g., by performing step 110 of Fig. 1), the process, e.g. steps 120, 130, 100, 102, 110, ... may be repeated, preferably until convergency is reached.

According to further preferred embodiments, given enough iterations, both the transport map (cf. e.g. the second neural network 20) and the first neural network 10 are optimal (their parameters do not change for iterations within a certain tolerance level or an agent using the first neural network 10 achieves good enough rewards over time), the training is stopped, cf. arrow 132.

Figure 2 schematically depicts a simplified block diagram according to further preferred embodiments. Depicted are the expert demonstrations ED as already explained above, and a first block B1 which symbolizes an initialization of the first neural network 10 (Fig. 3), e.g. similar to step 98 of Fig. 1. The dashed rectangle B2 relates to the determination of the reward function u*, also cf. step 110 of Fig. 1, wherein block B21 denotes (preferably) random sampling of said first number of trajectories $\tau_G$ (also cf. step 100 of Fig. 1), wherein block B22 denotes (preferably) random sampling of said second number of trajectories $\tau_E$ (also cf. step 102 of Fig. 1), wherein blocks B23 denote an evaluation of said reward function u, e.g. by means of the second neural network 20 (Fig. 4) for the respectively sampled trajectories $\tau_G$, $\tau_E$, wherein block B24 denotes the determination of the reward function u* (also cf. step 102 of Fig. 1), e.g. depending on [equation 1] as explained above, and wherein block B25 represents a training step similar to step 120 of Fig. 1 for updating or training, respectively, the first neural network 10, e.g. based on conventional policy gradient methods, also cf. references 1, 2 as mentioned above (TRPO, PPO).

According to further preferred embodiments, said method (Fig. 1) further comprises using 140 the, preferably trained, first neural network 10 for determining one or more actions depending on one or more states input to said first neural network 10, wherein said using 140 preferably comprises determining trajectories T for at least one mobile and/or movable device, e.g. for controlling a movement of said mobile and/or movable device or at least a component of said mobile and/or movable device depending on said trajectories.

Further preferred embodiments relate to an apparatus 200, cf. Fig. 5, for performing the method according to the embodiments, wherein said apparatus 200 preferably comprises at least one calculating unit 202 and at least one memory unit 204 associated with said at least one calculating unit 202 for at least temporarily storing a computer program PRG and/or data DAT, wherein said computer program PRG is configured to at least temporarily control an operation of said apparatus 200, particularly an execution of a method according to the embodiments.

According to further preferred embodiments, the at least one calculating unit 202 may comprise at least one of the following elements: a (micro)processor, a microcontroller, a digital signal processor (DSP), a programmable logic element (e.g., FPGA, field programmable gate array), an ASIC (application specific integrated circuit), hardware circuitry, a tensor processor. According to further preferred embodiments, any combination of two or more of these elements is also possible. Presently, the calculating unit 202 comprises several cores 202a, 202b, 202c for executing computer programs, especially functions and/or primitives usable for execution of the method according to the embodiments.

According to further preferred embodiments, the memory unit 204 comprises at least one of the following elements: a volatile memory 204a, particularly a random-access memory (RAM), a non-volatile memory 204b, particularly a Flash-EEPROM. Preferably, said computer program PRG is at least temporarily stored in said non-volatile memory 204b. Data DAT, which may e.g. be used for executing the method according to the embodiments, may at least temporarily be stored in said RAM 204a.

According to further preferred embodiments, an optional computer-readable storage medium SM comprising instructions, e.g. in the form of a further computer program PRG', may be provided, wherein said further computer program PRG', when executed by a computer, i.e. by the calculating unit 202, may cause the computer 202 to carry out the method according to the embodiments. As an example, said storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

According to further preferred embodiments, the apparatus 200 may comprise an optional data interface 205, preferably for bidirectional data exchange with an external device (not shown). As an example, by means of said data interface 205, a data carrier signal DCS may be received, e.g. from said external device, for example via a wired or a wireless data transmission medium, e.g. over a (virtual) private computer network and/or a public computer network such as e.g. the Internet. According to further preferred embodiments, the data carrier signal DCS may represent or carry the computer program PRG according to the embodiments and/or the expert data ED (Fig. 2), or any combination and/or at least a part thereof.

According to further preferred embodiments, the apparatus 200 may comprise a control output interface 206 for providing control output co, e.g. in the form of one or more output signals, to at least one mobile and/or movable device 300. Presently, it is assumed that the mobile device 300 is a vehicle such as an autonomous car or robot. According to further preferred embodiments, said device 300 may also represent a component of a mobile and/or movable device or the like. According to further preferred embodiments, the apparatus 200 may generate the control output co for control of one or more actuators 310 of said vehicle using the method according to the embodiments, particularly the trained first neural network 10, which can imitate expert behavior, as corresponding information has been provided to the first neural network 10 during the training procedure TP (Fig. 1) based, preferably solely, on the expert data ED, particularly without expert interaction during said training procedure TP (other any other time).

According to further preferred embodiments, the apparatus 200 may comprise an input interface 207 configured to receive state information or state input si, which may e.g. be provided by one or more sensor devices 320 of the vehicle 300 and/or associated with the vehicle (300) (e.g., a positioning and/or localizing system provided at least partly externally to the vehicle 300). According to further preferred embodiments, the apparatus 200 may provide said state input si and/or information derived therefrom as state information to the trained first neural network 10, whereby actions a (Fig. 3) are obtained, on which basis e.g. the control output co may be determined. This way, preferably in the application phase AP (Fig. 1) (but optionally also in the training phase TP), trajectories T for said vehicle 300, e.g. for controlling a movement of said vehicle 300 and/or at least a component of said vehicle 300 may be determined.

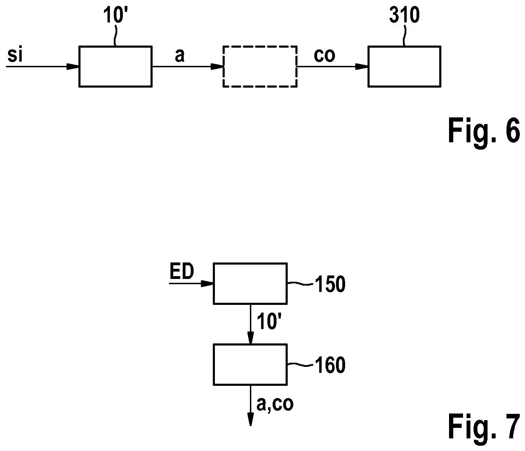

Figure 6 schematically depicts a simplified block diagram according to further preferred embodiments. State input si is provided to a trained first neural network 10' as obtained by the method according to the embodiments, e.g. by applying an optimal transport principle for training said first neural network 10 depending on expert demonstrations. The trained first neural network 10' generates a corresponding output a, which may directly be used to control at least one actuator 310 of the vehicle 300 (Fig. 5), or which may - optionally - be transformed to control output co for said at least one actuator 310 of the vehicle 300 according to further preferred embodiments.

Further preferred embodiments relate to a use of the method according to the embodiments and/or of the apparatus 200 according to the embodiments and/or of a trained first neural network 10' as obtained by the method according to the embodiments and/or of the computer program PRG according to the embodiments for determining control output co for controlling at least one actuator 310 of a mobile and/or movable device 300, preferably depending on state input si characterizing state information associated with said mobile and/or movable device 300.

Further preferred embodiments relate to a use of optimal transport for performing imitation learning of a machine learning system comprising at least a first neural network 10 depending on demonstration data ED. According to Applicant's analysis, applying the principle of optimal transport to the field of machine learning enables to efficiently train a machine learning system e.g. comprising a/said first neural network 10 depending on demonstration data ED such as expert demonstrations ED such that a so obtained trained first neural network 10' can imitate expert behavior associated with said expert demonstrations ED.

Further preferred embodiments, cf. Fig. 7, relate to a method of controlling at least one actuator 310 (Fig. 5) of a mobile device 300, particularly a vehicle, and/or movable device, particularly a component of a robot (e.g., actuator for driving a robotic arm), comprising training 150 (Fig. 7) a first neural network 10 (Fig. 3) in accordance with the method according to the embodiments (e.g., using optimal transport and expert demonstrations ED), whereby a trained first neural network 10' is obtained, and controlling 160 (Fig. 7) said at least one actuator 310 (Fig. 5) depending on an output a, co of said trained first neural network 10'. As a further example, one or more actuators of an (autonomous) vehicle may be controlled 160 (Fig. 7) using the (trained) first neural network 10' as provided in accordance with the method according to the embodiments. This way, expert behavior as trained according to preferred embodiments may be imitated in real-time settings, e.g. for dynamic control of said device 300.

As an example, preferred embodiments enable to learn a policy network 10' that can generate long-term trajectories T (Fig. 1), e.g. of agents imitating the experts' behavior, i.e., implementing a form of imitation learning. As a further example, in a highway driving scenario, the first neural network 10' may provide for control co of a car 300 automatically given current road state s.

While for the preceding explanations, neural networks 10, 20 have been used for purpose of illustration, according to further embodiments it is also possible to use other types of functions instead of said neural networks 10, 20.

The principle according to preferred embodiments enables to automatically (i.e., by way of a computer-implemented method) learn a model 10' from demonstration data ED that can perceive and act like an expert. The model 10' can e.g. be trained to make actions according to the current state s (Fig. 3), but also make a long-term action planning with respect to a certain reward/return.

The principle according to preferred embodiments can be interpreted as a type of Imitation Learning, where only observations from expert demonstration ED are available, but e.g. not expert interaction. Successful imitation learning directly from expert data ED as enabled by preferred embodiments explained herein can enable many useful applications, such as self-driving cars 300 (Fig. 5), robotics planning and so on. For instance in self-driving cars 300, one way of piloting the vehicles 300 automatically is to let the controllers 200, 10' learn how to behave like (e.g., human) expert drivers.

The principle according to preferred embodiments provides a framework for imitation learning to learn a policy that can take reasonable decisions on how to operate e.g. a car given a current state s, and even to predict long-term decisions to deal with the uncertainty on the road more robustly and securely.

As is well known, since the road situation and environment dynamics in the real world are extremely complicate, state-of-art solutions of imitation learning hardly apply in practice. Especially, a real motivation or reward of drivers may be mostly very sophisticated, for instances, some drivers might want to reach their destinations as fast as possible, but some others may drive the car in a more comfortable way without speeding ahead.

The principle according to preferred embodiments enables to tackle at least some of these problems of conventional approaches, e.g. by proposing a general generative framework for imitation learning using optimal transport theory. According to Applicant's analysis, the principle according to preferred embodiments is very sample efficient in terms of the expert demonstrations ED. I.e., according to preferred embodiments, very few demonstrations can achieve very good imitation results, which may outperform prior art with a large margin.

Advantageously, according to preferred embodiments, the reward function u* can be learned without expert interaction given merely expert demonstrations ED. Furthermore, at least some preferred embodiments may at least partly overcome typical issues with GAN (generative adversarial networks), e.g., vanishing gradients and/or mode collapse, that may typically appear during training processes of prior art.

According to further aspects, the principle according to preferred embodiments may be named as OPIL ("optimal transport for imitation learning"). Applicant has recognized that conventional approaches or primitives of reinforcement learning (RL) and/or inverse RL (IRL) can be transformed to an optimal transport problem, wherein further preferred embodiments address said optimal transport problem for efficient imitation learning, i.e. in the form of training 110 said first neural network 10.

According to further preferred embodiments, an arbitrary transport cost function c (Fig. 1) can be used for the optimal transport problem, thus empowering more flexibility of modeling environment and/or agent behavior. According to further preferred embodiments, this may be especially useful when the state-action of an agent cannot be simply compared trivially, such as with visual inputs from cameras.

According to further preferred embodiments, intrinsically the proposed method OPIL is a generative model, which generate expert-like policy. This enables flexible choices on parameterized models such as neural networks 10, 20. In general, according to further embodiments, the policy generator 10 can be any function approximator, wherein neural networks are particularly preferred due to their approximation power.

According to further preferred embodiments, an environmental state may be encoded as a latent variable in a lower dimension, e.g., as if in a variational autoencoder (VAE), e.g. to represent hidden facts of influencing experts decision-making (e.g., driving on the road).

## Claims

1. A computer-implemented method of training a first neural network (10) depending on demonstration data (ED), particularly expert demonstrations,

comprising a plurality of trajectories ($X_E$) being defined by state-action-pairs, wherein said first neural network (10) is configured to map states (s) to actions (a), said method comprising: sampling (100) a first number of trajectories ($\tau_G$) from said first neural network (10), sampling (102) a second number of trajectories ($\tau_E$) from said demonstration data (ED), wherein the demonstrations represent a collection of highway driving trajectories of multiple vehicles, determining (110) a reward function (u*) associated with an optimal transport mapping a distribution of said first number of trajectories ($\tau_G$) to a distribution of said second number of trajectories ($\tau_E$) which minimizes a transport cost associated with said optimal transport depending on a predetermined transport cost function (c), training (120) said first neural network (10) depending on said reward function (u*), and

using (140) the trained first neural network (10) for determining one or more actions (a) depending on one or more states (s) input to said first neural network (10), wherein said using (140) comprises determining trajectories (T) for at least one mobile and/or movable device (300) for controlling a movement of said mobile and/or movable device (300) or at least a component of said mobile and/or movable device (300) depending on said trajectories (T), **characterized in that** said reward function (u*) is determined in accordance with the following equation:

$$u^* \triangleq \sup_{u} \left( E_{\substack{(s,a)_i \sim X_G \\ (s,a)_j \sim X_E}} \left[ u(s,a)_j - u(s,a)_i \right] - \frac{1}{4\varepsilon} \sum_{i,j} \left\{ u_{(s,a)_j \sim X_E}(s,a) - \right. \right.$$

$$\left. \left. u_{(s,a)_i \sim X_G}(s,a) - c\left[ (s,a)_i, (s,a)_j \right] \right\}_+^2 \right)$$

wherein $u(s,a)$ characterizes the - e.g., current - reward function evaluated for a specific state-action pair $(s, a)$, wherein $E_{(s,a)}$ characterizes an empirical expectation, wherein $\frac{1}{4\varepsilon} \sum_{i,j} \left\{ u_{(s,a)_j \sim X_E}(s,a) - u_{(s,a)_i \sim X_G}(s,a) - c\left[ (s,a)_i, (s,a)_j \right] \right\}_\perp^2$ characterizes a regularizer term, wherein $\varepsilon$ characterizes a hyperparameter for said regularizer term, wherein $i$ is an index variable associated with the first number of trajectories $(\tau_G)$, wherein $j$ is an index variable associated with the second number of trajectories $(\tau_E)$, wherein $c[\cdot]$ represents said predetermined transport cost function (c),
wherein said sampling (100) of the first number of trajectories from said first neural network (10) comprise providing a third number of - e.g., random - states (s) to the first neural network (10) as input data, obtaining a corresponding third number of output data, i.e. actions (a), associated with said input data (s), wherein said third number of states together with said third number of output data forms said first number of trajectories, wherein the first number of trajectories from said first neural network is defined by the set $\left( X_G^{l1} \right)$, wherein $l1$ is said first number, wherein the second number of trajectories from said demonstration data is defined by the set $\left( X_E^{l2} \right)$, wherein $l2$ is said second number.

2. Method according to claim 1, further comprising modeling said reward function (u*) by means of a second neural network (20).

3. Method according to at least one of the preceding claims, further comprising initializing said first neural network (10) and/or said second neural network (20) with random or pseudorandom parameters.

4. Method according to at least one of the preceding claims, further comprising repeating (131a, 131b) the steps of sampling (100) a first number of trajectories $(\tau_G)$, sampling (102) a second number of trajectories $(\tau_E)$, determining (110) a reward function (u*), training (120) said first neural network (10) depending on said reward function (u*), preferably until a predetermined convergence criterion is reached (132).

5. Method according to at least one of the preceding claims, wherein said training (120) is performed by applying at least one of the following policy optimization techniques: Trust Region Policy Optimization, TRPO, Proximal Policy Optimization, PPO.

6. Method according to at least one of the preceding claims, wherein said training (120) comprises maximizing a time-discounted expected long-term reward.

7. Method according to at least one of the preceding claims, wherein said training (120) is performed in accordance with the following equation: $L_{u^*}(\theta) = \mathbb{E}_{s_0, a_0, \dots} \left[ \sum_{t=0}^{\infty} \gamma^t u^*(s_t, a_t) \right]$, wherein $(s_t, a_t)$ is a state-action pair at time t as can be obtained by the first neural network (10), wherein $\gamma$ is a discount factor, wherein $\mathbb{E}_{s_0, a_0, \dots}$ characterizes expected time-discounted long-term cumulative rewards computed by u function at each time step, wherein $\theta$ characterizes parameters of the first neural network, and wherein $L_{u^*}(\theta)$ represents said time-discounted expected long-term reward.

8. Method according to one of the preceding claims, further comprising determining control output (co) for controlling at least one actuator (310) of said mobile and/or movable device (300), preferably depending on state input (si) characterizing state information associated with said mobile and/or movable device (300), wherein said control output (co) is determined by means of said first neural network (10; 10') depending on said state input (si).

9.  Apparatus (200) for performing the method according to at least one of the preceding claims, wherein said apparatus (200) preferably comprises at least one calculating unit (202) and at least one memory unit (204) associated with said at least one calculating unit (202) for at least temporarily storing a computer program (PRG) and/or data (DAT), wherein said computer program (PRG) is configured to at least temporarily control an operation of said apparatus (200), particularly an execution of a method according to at least one of the claims 1 to 8.

10. A computer program (PRG) comprising instructions, which, when the program (PRG) is executed by a computer (202), cause the computer (202) to carry out the method according to at least one of the claims 1 to 8.

11. A computer-readable storage medium (SM) comprising instructions (PRG') which, when executed by a computer (202), cause the computer (202) to carry out the method according to at least one of the claims 1 to 8.

**Patentansprüche**

1.  Computer-implementiertes Verfahren zum Trainieren eines ersten neuronalen Netzwerks (10) in Abhängigkeit von Demonstrationsdaten (ED), insbesondere Expertendemonstrationen, umfassend eine Mehrzahl von Trajektorien ($X_E$), die durch Zustand-Aktion-Paare definiert sind, wobei das erste neuronale Netzwerk (10) dazu ausgelegt ist, Zustände (s) auf Aktionen (a) abzubilden, wobei das Verfahren umfasst: Sampeln (100) einer ersten Anzahl von Trajektorien ($\tau_G$) aus dem ersten neuronalen Netzwerk (10), Sampeln (102) einer zweiten Anzahl von Trajektorien ($\tau_E$) aus den Demonstrationsdaten (ED), wobei die Demonstrationen eine Sammlung von Autobahnfahrtrajektorien mehrerer Fahrzeuge repräsentieren, Bestimmen (110) einer Belohnungsfunktion (u*), die mit einem optimalen Transport assoziiert ist und eine Verteilung der ersten Anzahl von Trajektorien ($\tau_G$) auf eine Verteilung der zweiten Anzahl von Trajektorien ($\tau_E$) abbildet, was Transportkosten, die mit dem optimalen Transport assoziiert sind, in Abhängigkeit von einer vorbestimmten Transportkostenfunktion (c) minimiert, Trainieren (120) des ersten neuronalen Netzwerks (10) in Abhängigkeit von der Belohnungsfunktion (u*), und Verwenden (140) des trainierten ersten neuronalen Netzwerks (10) zum Bestimmen einer oder mehrerer Aktionen (a) in Abhängigkeit von einem oder mehreren Zuständen (s), die in das erste neuronale Netzwerk (10) eingegeben werden, wobei das Verwenden (140) Bestimmen von Trajektorien (T) für mindestens eine mobile und/oder bewegliche Vorrichtung (300) zum Steuern einer Bewegung der mobilen und/oder beweglichen Vorrichtung (300) oder mindestens einer Komponente der mobilen und/oder beweglichen Vorrichtung (300) in Abhängigkeit von den Trajektorien (T) umfasst, **dadurch gekennzeichnet, dass** die Belohnungsfunktion (u*) gemäß der folgenden Gleichung bestimmt wird:

$$u^* \triangleq \sup_{u}\left( E_{\substack{(s,a)_i \sim X_G \\ (s,a)_j \sim X_E}}\big[u(s,a)_j - u(s,a)_i\big] - \tfrac{1}{4\varepsilon}\sum_{i,j}\Big\{u_{(s,a)_j \sim X_E}(s,a) - \right.$$

$$\left. u_{(s,a)_i \sim X_G}(s,a) - c\big[(s,a)_i,(s,a)_j\big]\Big\}^2_+ \right)$$

wobei u(s,a) die - z. B. aktuelle - Belohnungsfunktion charakterisiert, die für ein spezifisches Zustand-Aktion-Paar (s,a) evaluiert wird, wobei $E_{(s,a)}$ eine empirische Erwartung charakterisiert, wobei

$\tfrac{1}{4\varepsilon}\sum_{i,j}\big\{u_{(s,a)_j \sim X_E}(s,a) - u_{(s,a)_i \sim X_G}(s,a) - c\big[(s,a)_i,(s,a)_j\big]\big\}^2_+$ einen Regularisiererterm charakterisiert,

wobei $\varepsilon$ einen Hyperparameter für den Regularisiererterm charakterisiert, wobei i eine Indexvariable ist, die mit der ersten Anzahl von Trajektorien ($\tau_G$) assoziiert ist, wobei j eine Indexvariable ist, die mit der zweiten Anzahl von Trajektorien ($\tau_E$) assoziiert ist, wobei c[·] die vorbestimmte Transportkostenfunktion (c) repräsentiert, wobei das Sampeln (100) der ersten Anzahl von Trajektorien aus dem ersten neuronalen Netzwerk (10) das Bereitstellen einer dritten Anzahl von - z. B. zufälligen - Zuständen (s) an das erste neuronale Netzwerk (10) als Eingabedaten, Erhalten einer entsprechenden dritten Anzahl von Ausgabedaten, d. h. Aktionen (a), die mit den Eingabedaten (s) assoziiert sind, umfasst, wobei die dritte Anzahl von Zuständen zusammen mit der dritten Anzahl von Ausgabedaten die erste Anzahl von Trajektorien bildet, wobei die erste Anzahl von Trajektorien aus dem ersten neuronalen Netzwerk durch den Satz $\left(X_G^{l1}\right)$ definiert ist, wobei l1 die erste Anzahl ist, wobei die zweite Anzahl von Trajektorien aus den Demonstrationsdaten durch den Satz $\left(X_E^{l2}\right)$ definiert ist, wobei l2 die zweite Anzahl ist.

**2.** Verfahren nach Anspruch 1, ferner umfassend Modellieren der Belohnungsfunktion (u\*) mittels eines zweiten neuronalen Netzwerks (20).

**3.** Verfahren nach mindestens einem der vorhergehenden Ansprüche, ferner umfassend Initialisieren des ersten neuronalen Netzwerks (10) und/oder des zweiten neuronalen Netzwerks (20) mit zufälligen oder pseudozufälligen Parametern.

**4.** Verfahren nach mindestens einem der vorhergehenden Ansprüche, ferner umfassend Wiederholen (131a, 131b) der Schritte des Sampelns (100) einer ersten Anzahl von Trajektorien ($\tau_G$), des Sampelns (102) einer zweiten Anzahl von Trajektorien ($\tau_E$), des Bestimmens (110) einer Belohnungsfunktion (u\*), des Trainierens (120) des ersten neuronalen Netzwerks (10) in Abhängigkeit von der Belohnungsfunktion (u\*), vorzugsweise, bis ein vorbestimmtes Konvergenzkriterium erreicht ist (132).

**5.** Verfahren nach mindestens einem der vorhergehenden Ansprüche, wobei das Trainieren (120) durch Anwenden von mindestens einer der folgenden Richtlinienoptimierungstechniken durchgeführt wird: TRPO, Trust Region Policy Optimization, PPO, Proximal Policy Optimization.

**6.** Verfahren nach mindestens einem der vorhergehenden Ansprüche, wobei das Trainieren (120) Maximieren einer zeitdiskontierten erwarteten langfristigen Belohnung umfasst.

**7.** Verfahren nach mindestens einem der vorhergehenden Ansprüche, wobei das Trainieren (120) gemäß der folgenden Gleichung durchgeführt wird: $L_{u^*}(\theta) = \mathbb{E}_{s_0, a_0, \dots} \left[ \sum_{t=0}^{\infty} \gamma^t u^*(s_t, \breve{a_t}) \right]$, wobei ($s_t$, $a_t$) ein Zustand-Aktion-Paar zum Zeitpunkt t ist, wie es durch das erste neuronale Netzwerk (10) erhalten werden kann, wobei $\gamma$ ein Diskontierungsfaktor ist, wobei $\mathbb{E}_{s_0, a_0, \dots}$ erwartete zeitdiskontierte langfristige kumulative Belohnungen charakterisiert, die durch u-Funktion zu jedem Zeitschritt berechnet werden, wobei $\theta$ Parameter des ersten neuronalen Netzwerks charakterisiert, und wobei $L_{u^*}(\theta)$ die zeitdiskontierte erwartete langfristige Belohnung repräsentiert.

**8.** Verfahren nach einem der vorhergehenden Ansprüche, ferner umfassend Bestimmen einer Steuerausgabe (co) zum Steuern mindestens eines Aktuators (310) der mobilen und/oder beweglichen Vorrichtung (300), vorzugsweise in Abhängigkeit von einer Zustandseingabe (si), die Zustandsinformationen charakterisiert, die mit der mobilen und/oder beweglichen Vorrichtung (300) assoziiert sind, wobei die Steuerausgabe (co) mittels des ersten neuronalen Netzwerks (10; 10') in Abhängigkeit von der Zustandseingabe (si) bestimmt wird.

**9.** Einrichtung (200) zum Durchführen des Verfahrens nach mindestens einem der vorhergehenden Ansprüche, wobei die Einrichtung (200) vorzugsweise mindestens eine Berechnungseinheit (202) und mindestens eine Speichereinheit (204), die der mindestens einen Berechnungseinheit (202) assoziiert ist, zum zumindest vorübergehenden Speichern eines Computerprogramms (PRG) und/oder von Daten (DAT) umfasst, wobei das Computerprogramm (PRG) dazu ausgelegt ist, einen Betrieb der Einrichtung (200) zumindest vorübergehend zu steuern, insbesondere eine Ausführung eines Verfahrens nach mindestens einem der Ansprüche 1 bis 8.

**10.** Computerprogramm (PRG), das Anweisungen umfasst, die dann, wenn das Programm (PRG) durch einen Computer (202) ausgeführt wird, veranlassen, dass der Computer (202) das Verfahren nach mindestens einem der Ansprüche 1 bis 8 ausführt.

**11.** Computer-lesbares Speichermedium (SM), das Anweisungen (PRG') umfasst, die, wenn sie durch einen Computer (202) ausgeführt werden, den Computer (202) veranlassen, das Verfahren nach mindestens einem der Ansprüche 1 bis 8 auszuführen.

**Revendications**

**1.** Procédé mis en œuvre par ordinateur d'entraînement d'un premier réseau neuronal (10) en fonction de données de démonstration (ED), en particulier de démonstrations d'experts, comprenant une pluralité de trajectoires ($X_E$) étant définies par paires état-action, dans lequel ledit premier réseau neuronal (10) est configuré pour mapper des états (s) à des actions (a), ledit procédé comprenant : l'échantillonnage (100) d'un premier nombre de trajectoires ($\tau_G$) à partir dudit premier réseau neuronal (10), l'échantillonnage (102) d'un deuxième nombre de trajectoires ($\tau_E$) à partir

desdites données de démonstration (ED), où les démonstrations représentent un ensemble de trajectoires de conduite sur autoroute de plusieurs véhicules, la détermination (110) d'une fonction de récompense (u*) associée à un transport optimal mappant une distribution dudit premier nombre de trajectoires ($\tau_G$) à une distribution dudit deuxième nombre de trajectoires ($\tau_E$) qui minimise un coût de transport associé audit transport optimal en fonction d'une fonction de coût de transport (c) prédéterminée, l'entraînement (120) dudit premier réseau neuronal (10) en fonction de ladite fonction de récompense (u*), et

l'utilisation (140) du premier réseau neuronal entraîné (10) pour déterminer une ou plusieurs actions (a) en fonction d'un ou plusieurs états (s) entrés dans ledit premier réseau neuronal (10), où ladite utilisation (140) comprend la détermination de trajectoires (T) d'au moins un dispositif mobile et/ou déplaçable (300) pour commander un déplacement dudit dispositif mobile et/ou déplaçable (300) ou d'au moins un composant dudit dispositif mobile et/ou déplaçable (300) en fonction desdites trajectoires (T), le procédé étant **caractérisé en ce que** ladite fonction de récompense (u*) est déterminée selon l'équation suivante :

$$u^* \triangleq \sup_{u} \left( E_{\substack{(s,a)_i \sim X_G \\ (s,a)_j \sim X_E}} \left[ u(s,a)_j - u(s,a)_i \right] - \frac{1}{4\varepsilon} \sum_{i,j} \left\{ u_{(s,a)_j \sim X_E}(s,a) - u_{(s,a)_i \sim X_G}(s,a) - c\left[ (s,a)_i, (s,a)_j \right] \right\}_+^2 \right)$$

où u(s,a) **caractérise, par** exemple, la fonction de récompense courante évaluée pour une paire action-état spécifique (s,a), où $E_{(s,a)}$ caractérise une espérance empirique, où $\frac{1}{4\varepsilon} \sum_{i,j} \left\{ u_{(s,a)_j \sim X_E}(s,a) - u_{(s,a)_i \sim X_G}(s,a) - c\left[ (s,a)_i, (s,a)_j \right] \right\}_+^2$ caractérise un terme de régularisation, où $\varepsilon$ caractérise un hyperparamètre pour ledit terme de régularisation, où i est une variable d'indice associée au premier nombre de trajectoires ($\tau_G$), où j est une variable d'indice associée au deuxième nombre de trajectoires ($\tau_E$), où c[·] représente ladite fonction de coût de transport prédéterminée (c),

où ledit échantillonnage (100) du premier nombre de trajectoires dudit premier réseau neuronal (10) comprend la fourniture d'un troisième nombre d'états (s) - par exemple aléatoires - au premier réseau neuronal (10) comme données d'entrée, l'obtention d'un troisième nombre correspondant de données de sortie, c'est-à-dire des actions (a), associées auxdites données d'entrée (s), où ledit troisième nombre d'états ainsi que ledit troisième nombre de données de sortie forment ledit premier nombre de trajectoires, où le premier nombre de trajectoires dudit premier réseau neuronal est défini par l'ensemble $\left( X_G^{l1} \right)$ où l1 est ledit premier nombre, où le deuxième nombre de trajectoires desdites données de démonstration est défini par l'ensemble $\left( X_E^{l2} \right)$, où l2 est ledit deuxième nombre.

2. Procédé selon la revendication 1, comprenant en outre la modélisation de ladite fonction de récompense (u*) au moyen d'un deuxième réseau neuronal (20).

3. Procédé selon au moins l'une des revendications précédentes, comprenant en outre l'initialisation dudit premier réseau neuronal (10) et/ou dudit deuxième réseau neuronal (20) avec des paramètres aléatoires ou pseudo-aléatoires.

4. Procédé selon au moins l'une des revendications précédentes, comprenant en outre la répétition (131a, 131b) des étapes d'échantillonnage (100) d'un premier nombre de trajectoires ($\tau_G$), l'échantillonnage (102) d'un deuxième nombre de trajectoires ($\tau_E$), la détermination (110) d'une fonction de récompense (u*), l'entraînement (120) dudit premier réseau neuronal (10) en fonction de ladite fonction de récompense (u*), de préférence jusqu'à ce qu'un critère de convergence prédéterminé soit atteint (132).

5. Procédé selon au moins l'une des revendications précédentes, dans lequel ledit entraînement (120) est réalisé en appliquant au moins l'une des techniques d'optimisation de politique suivantes : l'optimisation de politique à région de confiance, Trust Region Policy Optimization, TRPO et l'optimisation de politique proximale, Proximal Policy Optimization, PPO.

6. Procédé selon au moins l'une quelconque des revendications précédentes, dans lequel ledit entraînement (120) comprend la maximisation d'une récompense à long terme attendue actualisée dans le temps.

7. Procédé selon au moins l'une des revendications précédentes, dans lequel ledit entraînement (120) est effectué selon l'équation suivante : $L_{u^*}(\theta) = \mathbb{E}_{s_0, a_0 \dots} \left[ \sum_{t=0}^{\infty} \gamma^t u^*(s_t, a_t) \right]$, où $(s_t, a_t)$ est une paire état-action à l'instant t tel qu'elle peut être obtenue par le premier réseau neuronal (10), dans laquelle $\gamma$ est un facteur d'actualisation, où $\mathbb{E}_{s_0, a_0 \dots}$ caractérise des récompenses cumulées attendues à long terme actualisées dans le temps, calculées par la fonction u à chaque pas de temps, où $\theta$ caractérise les paramètres du premier réseau neuronal, et où $L_{u^*}(\theta)$ représente ladite récompense cumulée attendue à long terme actualisée dans le temps.

8. Procédé selon l'une des revendications précédentes, comprenant en outre la détermination d'une sortie de commande (co) pour commander au moins un actionneur (310) dudit dispositif mobile et/ou déplaçable (300), de préférence en fonction d'une entrée d'état (si) caractérisant les informations d'état associées audit dispositif mobile et/ou déplaçable (300), où ladite sortie de commande (co) est déterminée au moyen dudit premier réseau neuronal (10 ; 10') en fonction de ladite entrée d'état (si).

9. Appareil (200) pour la mise en œuvre du procédé selon au moins l'une des revendications précédentes, dans lequel ledit appareil (200) comprend de préférence au moins une unité de calcul (202) et au moins une unité de mémoire (204) associée à ladite au moins une unité de calcul (202) pour stocker, au moins temporairement, un programme informatique (PRG) et/ou des données (DAT), où ledit programme informatique (PRG) est configuré pour commander, au moins temporairement, un fonctionnement dudit appareil (200), en particulier exécution d'un procédé selon au moins l'une des revendications 1 à 8.

10. Programme informatique (PRG) comprenant des instructions qui, lorsque le programme (PRG) est exécuté par un ordinateur (202), amènent l'ordinateur (202) à accomplir les étapes du procédé selon au moins l'une des revendications 1 à 8.

11. Support de stockage lisible par ordinateur (SM) comprenant des instructions (PRG') qui, lorsqu'elles sont exécutées par un ordinateur (202), amènent l'ordinateur (202) à exécuter le procédé selon au moins l'une des revendications 1 à 8.

Fig. 1

Fig. 2

Fig. 3

Fig. 4

Fig. 5

10'

310

si → a → co

Fig. 6

ED → 150

10'

160

a,co

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LACOTTE, JONATHAN et al.** Risk-sensitive generative adversarial imitation learning. *The 22nd International Conference on Artificial Intelligence and Statistics, PMLR*, 2019
- **J. SCHULMAN** ; **S. LEVINE** ; **P. MORITZ** ; **M. I. JORDAN** ; **P. ABBEEL**. Trust Region Policy Optimization. *arXiv: 1502.05477v5 [cs.LG*, 20 April 2017
- **J. SCHULMAN** ; **F. WOLSKI** ; **P. DHARIWAL** ; **A. RADFORD** ; **O. KLIMOV**. Proximal Policy Optimization Algorithms. *arXiv:1707.06347v2 [cs.LG*, 28 August 2017